# EUROPÄISCHE PATENTSCHRIFT

(11) **EP 1 468 257 B1**
(45) Veröffentlichungstag und Bekanntmachung des Hinweises auf die Patenterteilung: **13.10.2010**
(21) Anmeldenummer: 03704395.7
(22) Anmeldetag: 15.01.2003
(51) Int. Cl.: G01G 3/14

(54) **KRAFTMESSZELLE**
FORCE MEASURING CELL
CELLULE DE MESURE DE FORCE

(30) Priorität: 26.01.2002 DE 10202951
(43) Veröffentlichungstag der Anmeldung: 20.10.2004
(73) Patentinhaber: Bizerba GmbH & Co. KG, 72336 Balingen (DE)
(72) Erfinder: SELIG, Klaus, Peter, 72336 Balingen (DE)
(74) Vertreter: Wössner, Gottfried
(86) Internationale Anmeldenummer: PCT/EP2003/000313
(87) Internationale Veröffentlichungsnummer: WO 2003/062761

(56) Entgegenhaltungen:
- DE-A- 2 556 117
- LU-A- 84 066
- US-A- 4 858 145

## Beschreibung

Die Erfindung betrifft eine Kraftmesszelle mit einem Kraftaufnehmer zur Aufnahme einer zu bestimmenden Gewichtskraft, wobei der Kraftaufnehmer ein nicht verformendes gehäusefestes Teil, ein elastisch verformbares Federteil und ein Krafteinleitungsteil umfasst, mit einer Sensoranordnung zum Erfassen der Verformung des Federteils sowie mit einer Vorrichtung zur Kompensation einer Vorlast.

In Waagen werden heute üblicherweise elektromechanische Kraftaufnehmer, oder auch Wägezellen genannt, zur Wandlung der zu bestimmenden Gewichtskraft in eine elektrische Größe verwendet. Diese elektrische Größe wird dann in einer geeigneten Form weiterverarbeitet, um den Messwert in Gewichtseinheiten in einer Waagenanzeige für den Benutzer ablesbar darzustellen. Die am häufigsten verwendeten Wägezellen basieren auf der Dehnungsmessstreifen-Technik oder auf dem Prinzip der elektromagnetischen Kraftkompensation.

Im Betrieb einer Waage werden die Wägezellen nicht nur mit der Gewichtskraft des Wägeguts belastet, sondern auch mit einer konstanten Vorlast, die sich aus dem Gewicht der sogenannten Lastplatte der Waage, auf die das Wägegut aufgelegt werden kann, sowie den Krafteinleitungsteilen der Waage selbst zusammensetzt. Eine weitere Vorlastkomponente ist beispielsweise die Gewichtskraft eines Aufnahmebehälters für ein bestimmtes Wägegut.

Bei vielen Waagen liegt die Vorlast in der Größenordnung von ca. 10 bis 20 % des Nutzlastbereichs der Waage, d.h. die Wägezelle muss eine um etwa 10 bis 20 % höhere Tragkraft besitzen als es der Nutzlastbereich der Waage vorgibt. Für eine Waage mit einem Nutzlastbereich von 15 kg wird man deshalb normalerweise eine Wägezelle mit 18 kg Tragkraft verwenden.

Diese größere Dimensionierung der Tragkraft der Wägezelle bedeutet für Waagen dieser Gattung an sich kein Problem.

Es gibt jedoch auch Waagen für spezielle Anwendungen, bei denen die Vorlast sehr viel größer ist. Dies sind in vielen Fällen Waagen mit auf der Lastplatte aufgebauten passiven oder aktiv angetriebenen Rollenbahnen oder Transportbändern, auf denen das Wägegut über die Waage transportiert und beim Durchlaufen gewogen wird. Ebenfalls zu erwähnen sind hier Behälterwaagen mit großen Behältervorlastgewichten.

Bei solchen Waagen liegt die Vorlast in der Größenordnung des Wägebereiches selbst, und es gibt sogar Fälle, bei denen die Vorlast deutlich größer ist als der Wägebereich der Waage.

Beispielsweise sind Einsatzgebiete für Waagen bekannt, bei denen der Wägebereich 1 kg beträgt und die Vorlast 3 kg. Eine Realisierung solcher Waagen bietet erhebliche technische Probleme.

In dem vorgenannten Beispiel mit einer Waage mit einem Wägebereich von 1 kg und einer Vorlast von 3 kg muss die verwendete Wägezelle mindestens 4 kg Tragkraft aufweisen. Da nur 1 kg bei der Messung genutzt wird, bedeutet dies eine Ausnutzung des zur Verfügung zu stellenden Messbereichs der Wägezelle von nur 25 %. Setzt man in diesem Beispiel eine fehlerfreie Teilung der Waage von 0,1 g an, was ein häufig geforderter Wert ist, so hat die Waage eine Genauigkeit von 1000 g / 0,1 g entsprechend 10.000 Tellungswerten.

Für die Wägezelle selbst sieht dies völlig anders aus. Da die Wägezelle einen Last bereich von 4 kg aufweist, verlangt eine Auflösung von 0,1 g gemäß obigem Beispiel für die Wägezelle 4000 g / 0,1 g, d.h. 40.000 Teilungswerte. Demzufolge muss die Wägezelle eine Genauigkeit besitzen, die das vierfache der Waagengenauigkeit beträgt. Dies ist eine erhebliche Anforderung an das Wägesystem und erfordert einen entsprechenden großen konstruktiven und auch finanziellen Aufwand.

Hinzu kommt, dass das Ausgangssignal der Wägezelle (meistens eine elektrische Spannung) für die eigentliche Gewichtsbestimmung verwendet wird, nur 25 % des maximal möglichen Wertes beträgt. Aufgrund dieses deutlich kleineren Ausgangssignals nimmt die Störfestigkeit eines solchen Systems gegenüber elektromagnetischen Störungen ab, was entweder die Messgenauigkeit mindert oder zusätzliche Abschirmmaßnahmen erfordert.

Aus der JP 09-243 441 A1 ist bekannt, mittels einer zweiten aktiv betriebenen Wägezelle über eine magnetische Kraftkompensation eine Vorlastkompensation zu realisieren. Diese Lösung ist technisch sehr aufwendig und aufgrund der Verwendung von zwei Wägezellen sehr teuer.

Einen anderen Ansatz verfolgt die DE 200 22 494 U1, welcher einen an den Krafteinleitungsteil an dessen gehäusefesten Ende angeformten Übersetzungshebel vorsieht, über den nach dem Prinzip der Balkenwaage eine Kraft eingeleitet werden kann, die der Vorlastkompensation dient. Auch diese Lösung verlangt einen komplexen Aufbau der Wägezelle und führt somit zu hohen Fertigungskosten.

In einem Sonderfall wird hier zur Kompensation der Vorlast eine Feder eingesetzt. Diese greift aber nicht direkt am Krafteinleitungsteil an, sondern ist mit diesem über einen Hebelmechanismus verbunden. Dies führt zu einem Schwingungsverhalten der Kraftmesszelle, welches diese für viele Einsatzzwecke ungeeignet macht. Dies gilt insbesondere für den Einsatz bei selbstständig arbeitenden Wägevorrichtungen wie sie häufig bei Förderguttransportstrecken zum Einsatz kommen.

Weitere Kraftmeßzellen sind aus DE-A-25 56 117, LU-A-84 066 und US-A-4 858 145 bekannt.

Aufgabe der vorliegenden Erfindung ist es, eine Kraftmesszelle so weiter zu bilden, dass sie im Betrieb mit hohen Vorlasten die vorgenannten Nachteile vermeidet. Diese Aufgabe ist durch die im Kennzeichen des unabhängigen Vorrichtungsanspruch 1 angegebenen Merkmale gelöst. Vorteilhafte Ausgestaltungen dieser Konstruktion ergeben sich aus den Merkmalen den abhängigen Ansprüchen 2-9.

Diese Aufgabe wird erfindungsgemäß bei der eingangs beschriebenen Kraftmesszelle dadurch gelöst, dass die Kompensationsvorrichtung eine Feder umfasst, welche unmittelbar mit dem Krafteinleitungsteil verbunden ist, auf das die zu bestimmende Gewichtskraft einwirkt, und auf das Krafteinleitungsteil eine zur Gewichtskraft entgegengesetzte Korrekturkraft ausübt.

Die erfindungsgemäße Lösung der Aufgabe erscheint auf den ersten Blick extrem problembehaftet zu sein, lässt man doch in Form der Feder direkt am Krafteinleitungsteil eine Gegenkraft zu der zu messenden Gewichtskraft angreifen, deren "Fehler" sich unmittelbar auf die Genauigkeit der Waage bzw. die Verlässlichkeit des Wägeergebnisses auswirken. Da die Feder direkt am Krafteinleitungsteil angreift, führen jegliche Veränderungen in der Federkraft unmittelbar zu einem Messfehler der Wägezelle. Die in diesem Zusammenhang anzusprechenden Ursachen für Änderungen in der Federkraft der Feder sind folgende:
- Abhängigkeit der Federkraft von der Temperatur (Temperaturbeiwert des E-Moduls der Feder)
- Werkstoffkriechen beim Federmaterial
- Veränderungen an den Befestigungs- / Einspannstellen der Feder
- Veränderungen am Gegenlager der Feder.

Überraschenderweise zeigt sich jedoch, dass die vorgenannten Probleme durchaus beherrschbar sind, wie im Folgenden gezeigt werden wird:

Temperaturbedingten Änderungen der Federkraft kann dadurch begegnet werden, dass man für das Federmaterial eine spezielle metallische Legierung verwendet, bei der der Temperaturbeiwert deutlich niedriger ist als bei üblichem Federstahl. Materialien, die hier einen 100fach kleineren Beiwert zeigen, sind für diesen Zweck bestens geeignet. Dies gilt beispielsweise für Nickel-Eisen-Chrom-Legierungen, wie sie z.B. unter dem Handelsnamen "Thermelast" von der Fa. Vakuumschmelze GmbH & Co. KG, Hanau zu beziehen sind. Die Verwendung solcher Materialien reduziert also den durch Temperaturänderungen hervorgerufenen Messfehler um den Faktor 100.

Die oben genannten weiteren Ursachen für Messfehler erweisen sich im Vergleich mit dem durch Temperaturänderungen hervorgerufenen Messfehler als unbedeutend.

Als Gegenlager für die Feder kann im Prinzip ein beliebiges feststehendes Teil der Gehäusekonstruktion, beispielsweise das Waagengestell oder die Waagengrundplatte dienen, an welcher das nicht verformende gehäusefeste Teil befestigt ist.

Es zeigt sich jedoch, dass das Waagengestell oder die Waagengrundplatte in der Regel nicht steif genug sind und Verformungen dieser Teile beim Beladen der Waage über das Gegenlager der Feder Messfehler verursachen.

Bevorzugt wird deshalb die erfindungsgemäße Kraftmesszelle so ausgeführt, dass sie als eine Einheit eingebaut bzw. auch ausgetauscht werden kann. Hierzu wird vorzugsweise vorgesehen, dass der Kraftaufnehmer das Gegenlager umfasst, und dass die Feder der Kompensationsvorrichtung einerseits mit dem Krafteinleitungsteil und andererseits mit dem Gegenlager des Kraftaufnehmers verbunden ist.

Hierdurch vermeidet man Relativbewegungen von Gegenlager und Wägezelle, die sich sonst unmittelbar als Kraftänderungen an der Feder und somit als Wägefehler bemerkbar machen.

Bevorzugt wird das Gegenlager als ein Ausleger ausgebildet, der sich von dem gehäusefesten Teil des Kraftaufnehmers im Wesentlichen parallel zu dem Krafteinleitungsteil erstreckt.

Das Gegenlager bzw. der Ausleger können separate Teile sein, die an dem gehäusefesten Teil des Kraftaufnehmers befestigt, beispielsweise verschraubt sind, oder aber bevorzugt einstückig mit den weiteren Komponenten des Kraftaufnehmers ausgebildet sein, d.h. insbesondere zusammen mit dem gehäusefesten Teil und dem Krafteinleitungsteil aus einem Block hergestellt sein.

Bevorzugt wird die bei der erfindungsgemäßen Kraftmesszelle eingesetzte Feder zur Vorlastkompensation als eine Zugfeder ausgebildet sein.

Die Auswahl der Federmaterialien ist, wie oben ausgeführt, von besonderer Bedeutung, wenn es darum geht, die Waage mit einer großen Genauigkeit bzw. einer hohen Störfestigkeit auszurüsten. Hierbei empfiehlt es sich, die Feder aus einem Material herzustellen, dessen Temperaturbeiwert des Elastizitätsmoduls < 5 ppm / °C ist.

Besonders bevorzugte Materialien sind Nickel-Eisen-Chrom-Legierungen, die insbesondere auch vorgenannte Anforderungen bezüglich des Temperaturbeiwerts des Elastizitätsmoduls erfüllen können.

Ein konkretes Beispiel hierfür ist das sogenannte Thermelast-Material der Firma Vakuumschmelze GmbH & Co. KG, Hanau.

Eine weitere wesentliche Verbesserung eines solchen Systems erzielt man durch eine geeignete Einstellung der Federsteifigkeit der Feder. Es zeigt sich nämlich, dass durch eine geeignete geometrische Auslegung der Feder die Federsteifigkeit unabhängig von der aufzubringenden Federkraft eingestellt werden kann. Der Mechanismus des dadurch erzielbaren Vorteils ist im Folgenden beschrieben.

Alle Wägezellen erfahren durch die Belastung mit der zu messenden Gewichtskraft eine Verformung bzw. Auslenkung des Wägezellenkörpers. Dies bedeutet, dass das Krafteinleitungsteil der Wägezelle bei Belastung sich in Richtung der wirkenden Kraft verschiebt.

Eine Wägezelle selbst verhält sich also bei Belastung mit der zu messenden Gewichtskraft selbst wie eine Feder. Da diese Verformung bzw. Auslenkung sehr gering ist (in der Regel im Bereich einiger zehntel Millimeter), bedeutet dies, dass die "Wägezellenfeder" eine sehr hohe Steifigkeit besitzt. Quantitativ wird dies durch die sogenannte Federsteifigkeit k_{WZ} ausgedrückt. Diese Federsteifigkeit ist definiert als Quotient aus der wirkenden Kraft und der Verschiebung der Feder. Für bekannte Wägezellen etwa mit 10 kg Messbereich (entsprechend 100 N) findet man Federkonstanten k_{WZ} von etwa 300 N/mm.

Bei der erfindungsgemäßen Vorlastkompensation mit Hilfe einer Feder ist diese Feder kräftemäßig parallel zur "Wägezellenfeder" angeordnet. Eine genaue Analyse zeigt, dass die Messfehler, die durch die Kompensationsfeder selbst erzeugt werden, nur im Verhältnis der Federsteifigkeiten k_{KF} / k_{WZ} eingehen. Hierbei ist k_{KF} die Federkonstante der Kompensationsfeder und k_{WZ} die Federkonstante der Wägezelle.

Wenn man also durch konstruktive Auslegung der Kompensationsfeder dafür sorgt, dass diese eine viel kleinere Federkonstante als die Wägezelle hat, so verringert sich der Fehlereinfluss der Kompensationsfeder erheblich.

Die erfindungsgemäße Kraftmesszelle wird deshalb bevorzugt so ausgelegt, dass die Federkonstante k_{KF} der Kompensationsfeder um mindestens den Faktor 10 kleiner ist als die Federkonstante k_{WZ} des Federteils der Wägezelle.

Dieser Faktor kann konstruktiv auf 100 oder mehr gesteigert werden, wobei die zu treffenden Maßnahmen dem Fachmann bekannt sind.

Die erfindungsgemäße Kraftmesszelle weist vorteilhafterweise eine Sensoranordnung mit einem Dehnungsmessstreifen auf, mit dem die elastische Verformung des Federteils ermittelt wird.

Alternativ hierzu kann vorgesehen sein, dass die Kraftmesszelle als eine Sensoranordnung/Kraftmessvorrichtung eine elektromagnetische Kraftkompensationsvorrichtung aufweist.

Diese und weitere Vorteile der Erfindung werden im Folgenden anhand der Zeichnung noch näher erläutert.

Die einzige Figur zeigt eine schematische Darstellung einer erfindungsgemäßen Kraftmesszelle 10.

Die erfindungsgemäße Kraftmesszelle 10 ist dabei mit einem gehäusefesten Teil 11 an einem Gehäuse (nicht gezeigt) einer Waage gehalten. Vom gehäusefesten Teil 11 weg erstreckt sich ein Krafteinleitungsteil 12 als Federteil sowie im Wesentlichen parallel hierzu ein Ausleger 14. Das Krafteinleitungsteil 12 weist zwischen seinem freien und seinem mit dem gehäusefesten Teil 11 des Kraftaufnehmers verbundenen Teil Gelenkstellen 16 auf, die beim Einwirken einer Kraft F auf das freie Ende des Krafteinleitungsteils 12 eine elastische Verformung des Krafteinleitungsteils 12 erlauben. An der Oberseite des Krafteinleitungsteils 12 sind im Bereich der Gelenkstellen 16 zwei Dehnungsmessstreifen 18 angeordnet, über die das Ausmaß der Verformung des Krafteinteitungsteils 12 messbar und damit die Kraft F bestimmbar wird.

Zur Kompensation der Vorlast, die auf das Krafteinleitungsteils 12 wirkt, ist eine Feder 20 vorgesehen, welche als Zugfeder ausgebildet ist und mit einem Ende an einem Gegenlager 22 am Krafteinleitungsteil 12 befestigt ist und mit ihrem anderen Ende am Ausleger 14, d.h. also gehäusefest gehalten ist.

Aufgrund der Federkraft der Zugfeder 20 lässt sich die auf das Krafteinleitungsteil einwirkende Vorlast kompensieren, so dass das Krafteinleitungsteil 12 nur noch für den eigentlich gewünschten Wägebereich ausgelegt werden muss.

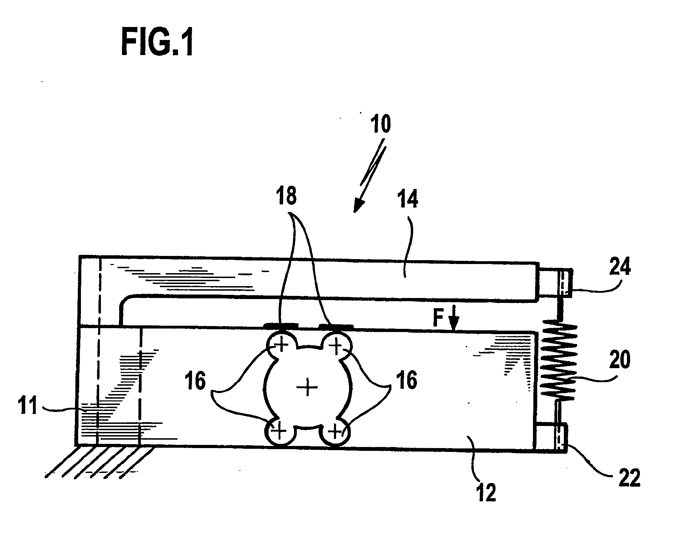

Der Ausleger 14 und das gehäusefeste Teil 11 zusammen mit dem Krafteinleitungsteil 12 können gegebenenfalls einstückig ausgebildet und nicht wie im Beispiel der Figur 1 gezeigt aus zwei Teilen zusammengesetzt sein.

Vorteilhaft bei der in Figur 1 gezeigten Ausführungsform, bei der die Zugfeder 20, die der Kompensation der Vorlast dient, mit beiden Enden an Teilen der Kraftmesszelle befestigt ist, ist, dass diese Art der Vorlastkompensation unabhängig von dem Gehäuse und dessen eventueller Durchbiegungen oder Verwindungen stets eine konstante Vorlastkorrektur ergibt. Damit werden solche Art von Messfehlern von vornherein vermieden.

Die Kompensationsfeder 20 ist an ihren Enden wie gezeigt an den Klemmbefestigungen 22 und 24 befestigt, jedoch könnte die Feder auch über einen Schweißpunkt, beispielsweise mittels Laserschweißen, statt der Klemmverbindungen 22, 24 an dem Krafteinleitungsteil 12 bzw. an dem Ausleger 14 befestigt sein. Hierdurch lassen sich Veränderungen an den Befestigungs- bzw. Einspannstellen der Feder 20 weitgehend während der Lebensdauer der Wägezelle ausschließen, was dem weiteren Minimieren von Ursachen von Messfehlern dient.

Durch die Verwendung von geeigneten Legierungen, wie z.B. die Nickel-Eisen-Chrom-Legierung "Thermelast", für die Herstellung der Kompensationsfeder 20 lassen sich aus Temperaturänderungen herrührende Messfehler weitgehend eliminieren.

## Patentansprüche

1. Kraftmesszelle (10) mit einem Kraftaufnehmer zur Aufnahme einer zu bestimmenden Gewichtskraft, wobei der Kraftaufnehmer ein nicht verformendes gehäusefestes Teil (11), ein elastisch verformbares Federteil (16) und ein Krafteinleitungsteil (12) umfasst, mit einer Sensoranordnung (18) zum Erfassen der Verformung des Federteils (16) sowie mit einer Vorrichtung zur Kompensation (20) einer Vorlast, wobei die Kompensastionsvorrichtung eine Feder (20) umfasst, welche unmittelbar mit dem Krafteinleitungsteil (12) verbunden ist, auf das die zu bestimmende Gewichtskraft einwirkt, und welche auf das Krafteinleitungsteil eine zur Gewichtskraft entgegengesetzte Korrekturkraft ausübt, **dadurch gekennzeichnet, dass** der Kraftaufnehmer ein Gegenlager (14) umfasst und dass die Feder (20) der Kompensationsvorrichtung einerseits mit dem Krafteinleitungsteil (12) und andererseits mit dem Gegenlager (14) des Kraftaufnehmers verbunden ist und dass die Feder aus einem Material hergestellt ist, dessen Temperaturbeiwert des Elastizitätsmoduls < 5 ppm / °C ist.

2. Kraftmesszelle nach Anspruch 1, **dadurch gekennzeichnet, dass** das Gegenlager ein Ausleger ist, der sich von dem gehäusefesten Teil des Kraftaufnehmers im Wesentlichen parallel zu dem Krafteinleitungsteil erstreckt.

3. Kraftmesszelle nach Anspruch 1 oder 2, **dadurch gekennzeichnet, dass** das Gegenlager bzw. der Ausleger einstückig mit den weiteren Komponenten des Kraftaufnehmers ausgebildet ist.

4. Kraftmesszelle nach einem der voranstehenden Ansprüche, **dadurch gekennzeichnet, dass** die Feder eine Zugfeder ist.

5. Kraftmesszelle nach Anspruch 4, **dadurch gekennzeichnet, dass** die Feder aus einer Nickel-Eisen-Chrom-Legierung hergestellt ist.

6. Kraftmesszelle nach einem der voranstehenden Ansprüche, **dadurch gekennzeichnet, dass** die Federkonstante k_{KF} der Kompensationsfeder um mindestens den Faktor 10 kleiner ist als die Federkonstante k_{WZ} des Federteils.

7. Kraftmesszelle nach einem der voranstehenden Ansprüche, **dadurch gekennzeichnet, dass** die Feder mit dem Krafteinleitungsteil mittels Laserpunktschweißen verbunden ist.

8. Kraftmesszelle nach einem der voranstehenden Ansprüche, **dadurch gekennzeichnet, dass** die elastische Verformung des Federteils mittels einer Sensoranordnung mit einem Dehnungsmessstreifen ermittelt wird.

9. Kraftmesszelle nach einem der Ansprüche 1 bis 7, **dadurch gekennzeichnet, dass** die Kraftmesszelle als Sensoranordnung eine elektromagnetische Kraftkompensationsvorrichtung aufweist.

## Claims

1. Load cell (10) with a force transducer for recording a weight force to be determined, the force transducer having a part (11) which does not deform and is fixed to the housing, an elastically deformable spring part (16) and a force introducing part (12), with a sensor arrangement (18) for sensing the deformation of the spring part (16) and also with a device (20) to compensate for an initial load, the compensation device comprising a spring (20) which is directly connected to the force introducing part (12), on which the weight force to be determined acts, and which exerts, on the force introducing part, a corrective force that is opposed to the weight force, **characterized in that** the force transducer comprises an end support (14), and **in that** the spring (20) of the compensation device is connected on the one hand to the force introducing part (12) and on the other hand to the end support (14) of the force transducer, and **in that** the spring is produced from a material of which the temperature coefficient of the modulus of elasticity is < 5 ppm/°C.

2. Load cell according to claim 1, **characterized in that** the end support is an extension arm, which extends from the part of the force transducer that is fixed to the housing substantially parallel to the force introducing part.

3. Load cell according to claim 1 or 2, **characterized in that** the end support or the extension arm is formed in one piece with the further components of the force transducer.

4. Load cell according to any one of the preceding claims, **characterized in that** the spring is a tension spring.

5. Load cell according to claim 4, **characterized in that** the spring is produced from a nickel-iron-chromium alloy.

6. Load cell according to any one of the preceding claims, **characterized in that** the spring constant k_{KF} of the compensation spring is less by at least a factor of 10 than the spring constant k_{WZ} of the spring part.

7. Load cell according to any one of the preceding claims, **characterized in that** the spring is connected to the force introducing part by means of laser spot welding.

8. Load cell according to any one of the preceding claims, **characterized in that** the elastic deformation of the spring part is determined by means of a sensor arrangement with a strain gauge.

9. Load cell according to any one of claims 1 to 7, **characterized in that** the load cell has as a sensor arrangement an electromagnetic force compensating device.

## Revendications

1. Cellule de mesure de force (10) comprenant un capteur de force pour capter une force de poids ou un poids à déterminer, le capteur de force englobant une pièce (11) ne se déformant pas, fixe avec le carter, une pièce élastique (16) déformable élastiquement, et une pièce d'application de force (12), la cellule de mesure comprenant également un agencement de détection (18) destiné à détecter la déformation de la pièce élastique (16), ainsi qu'un dispositif (20) pour la compensation d'une charge préalable, le dispositif de compensation englobant un ressort (20), qui est relié directement à la pièce d'application de force (12) sur laquelle agit ledit poids à déterminer, et qui exerce sur la pièce d'application de force, une force de correction opposée audit poids, **caractérisée en ce que** le capteur de force comprend un support de butée conjugué (14), et **en ce que** le ressort (20) du dispositif de compensation est relié d'un côté à la pièce d'application de force (12) et de l'autre côté au support de butée conjugué (14) du capteur de force, et **en ce que** le ressort est fabriqué en un matériau dont le coefficient de température du module d'élasticité est inférieur à 5 ppm/°C.

2. Cellule de mesure de force selon la revendication 1, **caractérisée en ce que** le support de butée conjugué est un bras en porte-à-faux, qui s'étend à partir de la pièce du capteur de force, fixe avec le carter, sensiblement de manière parallèle à la pièce d'application de force.

3. Cellule de mesure de force selon la revendication 1 ou la revendication 2, **caractérisée en ce que** le support de butée conjugué ou le bras en porte-à-faux est réalisé d'un seul tenant avec les autres composants du capteur de force.

4. Cellule de mesure de force selon l'une des revendications précédentes, **caractérisée en ce que** le ressort est un ressort de traction.

5. Cellule de mesure de force selon la revendication 4, **caractérisée en ce que** le ressort est fabriqué en un alliage de nickel-fer-chrome.

6. Cellule de mesure de force selon l'une des revendications précédentes, **caractérisée en ce que** la constante de ressort k_{KF} du ressort de compensation est plus petite d'au moins un facteur 10 que la constante de ressort k_{WZ} de la pièce élastique.

7. Cellule de mesure de force selon l'une des revendications précédentes, **caractérisée en ce que** le ressort est replié à la pièce d'application de force par soudage par points au laser.

8. Cellule de mesure de force selon l'une des revendications précédentes, **caractérisée en ce que** la déformation élastique de la pièce élastique est déterminée au moyen d'un agencement de détection comprenant une jauge de contrainte.

9. Cellule de mesure de force selon l'une des revendications 1 à 7, **caractérisée en ce que** la cellule de mesure de force présente, en guise d'agencement de détection, un dispositif de compensation de force électromagnétique.
